# EUROPEAN PATENT APPLICATION

(11) **EP 2 843 597 A1**
(43) Date of publication of application: **04.03.2015**
(21) Application number: 14181997.9
(22) Date of filing: 22.08.2014
(51) Int. Cl.: G06Q 10/00

(54) **System and methods for improved communication of information**

(30) Priority: 23.08.2013 US 201361869640 P
(71) Applicant: The NDSU development Foundation Alumni Association, Fargo, ND 58102 (US)
(72) Inventor: Brookins, Timothy James, West Fargo, ND 58078 (US)
(74) Representative: O'Connor, Michael Donal

(57) **Abstract**

The present invention facilitates communication between users of a computer system. More specifically, the present invention relates to a system and methods by which users may submit a variety of information relevant to an event or other subject and the information is selectable to be automatically and efficiently integrated and displayed to provide one or more sets of aggregated information that may be useful to a wider group of users.

## Description

### GOVERNMENT INTEREST STATEMENT

Not applicable.

### CROSS-REFERENCE TO RELATED APPLICATION

This application claims priority to United States Provisional Patent Application No. 61/869,640 filed August 23, 2013 which is incorporated by reference in its entirety.

### FIELD OF THE INVENTION

The present invention relates generally to communication between users of a computer system. More specifically, the present invention relates to a system and methods by which users may submit a variety of information relevant to an event or other subject and the information is selectable so that it may be automatically and efficiently integrated and displayed to provide one or more sets of aggregated information that may be useful to a wider group of users.

### BACKGROUND OF THE INVENTION

The advent of computer systems has transformed the options that may be used for communication. The capability to make computer systems smaller has increased the portability and, accordingly, accessibility of computer systems to computer users. A computer system may include, a desktop computer, a laptop computer, a tablet computer, a netbook computer, a smartphone, an mp3 player, a personal digital assistant ("PDA"), a computer embedded in a vehicle or other devices, or other sizes and configurations known in the art.

Over time, many processes have been developed to facilitate computer-enabled communication. Such processes may facilitate the exchange of messages through electronic mail ("e-mail"), instant messaging, text messaging, inbox messaging, and others. Typically, such messaging procedures require the user to direct the message to specific recipients.

While such processes permit exchanging messages, users sometimes wish to share information without having to direct the message to specific recipients. Accordingly, such users may take advantage of other processes configured to permit sharing information which may be available to anyone with access to the Internet, access to a specific program, or may be selectively accessible to users with a password.

Many systems, methods, and programs have been developed to permit users to share certain information. For example, some systems utilize a passive website that generally permits one entity to post information about a topic. However, often such a website is not configured to receive information from its users through the website. Accordingly, the scope of information shared at such websites is typically limited.

Other known systems are configured to permit a user to submit and publish certain information. Such systems often permit a user to submit generally random information, which is not required to have any connection to any other information provided. An example of generally random information includes a "status update" published on social interaction sites such as the Twitter® site or Facebook® site. While certain systems permit users to organize "groups" configured to permit publishing information related to some topic or event, the information collected from users in the group is typically published sequentially one submission at a time without integrating any of the various submissions.

Also, while certain known systems permit aggregating - that is, storing together - a collection of information obtained from a crowd of users, such systems often provide only limited options for automatically integrating and displaying such collection of information efficiently such as in a single representation.

In addition, certain known social interaction systems permit the user to submit only limited types of information for publication. For example, in certain known systems, a user can submit his or her current location for publication on the Facebook® site or Twitter® site. However, the user typically can submit only limited additional information that is relevant to the earlier submitted information such as information regarding the user's planned future locations or planned route or routes for getting to each of the certain locations.

Clearly, there is a demand for a system and methods by which users may submit information of relevance to an event or other subject and by which the submitted information is automatically and efficiently integrated and displayable to provide one or more sets of aggregated information that may be useful to a wider group of users. The present invention satisfies this demand.

### SUMMARY OF THE INVENTION

For purposes of this application, certain embodiments of the present invention are discussed in reference to collecting, integrating, and displaying event-specific information from one or more users, but the discussion is merely exemplary. The present invention is applicable to collecting, integrating, and displaying, not only event-specific information, but also information related to a subject that may not be necessarily be an event, such as a topic, hobby, item, or location.

For purposes of this application, the term "event" means an occurrence of something rare, notable, or otherwise of interest. An event may include an occurrence that is scheduled or anticipated to happen at one specific time, or over a period of time, or repeatedly during an interval of time. An example of an event is a gathering of people, activity of non-human organisms (e.g., migration of animals, blooming of rare plant, etc.), activity regarding a natural phenomenon, or activity regarding a certain destination.

As more specific examples of events, people may gather at or as a result of a conference, festival, concert, party, ceremony (e.g., wedding, graduation, etc.), recreational or competitive sporting activity, consumer activity, professional activity, occupational activity, or government activity. Examples of a natural phenomenon include a meteorological phenomenon (e.g., hurricane, thunderstorm, wind, tornado, rainbow, other weather-related activity), geological phenomenon (e.g., volcanic activity, earthquake, beach), or oceanographic phenomenon (e.g., tsunamis or ocean tides). A destination may include any location that a person wishes to visit, regardless of whether other people will be there.

Certain events may be categorized as "primary events" or "related events". For purposes of this application, a "related event" is an event that was generally created or organized as a result of or in response to a primary event and may be associated in some way with the primary event. A related event may occur before, during or after a primary event.

For example, a university football game may be characterized as a primary event. Related events for such a primary event may include purchasing a ticket to the game, travelling to the location of the game (e.g., by vehicle, train, or airplane), staying at a hotel before or after the game, eating or drinking at a restaurant before, during, or after the game, going to a bonfire or other pep rally before the game, meeting a mascot of the university, arriving at the stadium, tailgating before, during, or after the game, watching the game via a broadcast (e.g., at a bar or restaurant via television or computer), attending or viewing a news conference regarding the game, taking action with respect to a "fantasy" football team before or as a result of the game, observing a parade (e.g., Rose Bowl parade) related to the game, or hearing a marching band play before, during, or after the game.

Sometimes, a primary event may be related to another primary event. Multiple primary events may form what is termed a "series of primary events". In the university sporting event example, a series of primary events may include a season of football games, a selected group of football games (e.g., those games sold in a ticket package), a group of "conference" football games, a group of "non-conference" football games, some or all "home" games, or some or all "away" games".

Similarly, there may be a relationship between multiple series of primary events, termed for purposes of this application a "superseries of primary events". Again, in the university example, a superseries of primary events may include multiple series of games in different sports (e.g., some or all the games played by various university teams in fall season, winter season, spring season, summer season, two or more seasons, or all year) or multiple series of the same sport year after year.

As discussed above, certain embodiments of the present invention are configured to at least allow users to submit, and therefore allow the system to collect from users event-specific information and integrate such information. Certain preferred embodiments of the present invention include at least a collection component and an integration component.

A collection component may be configured to allow one or more users to submit information to the system. For example, a collection component may include a user interface configured to allow one or more users to submit information to the system. Certain embodiments of the present invention may permit a user to submit information identifying the user and information identifying the event or subject for which the user is submitting the information .

To permit a user to identify himself, herself, or itself, the system may include a user interface that may include any one or more submission components to facilitate the submission - and therefore collection by the system - of one or more type of user identifying information. Such submission components may be one or more of the following user identifying fields: a user name field; user address field; user email address field; user demographic information; user affiliation field; user starting location field; user intermediate location field; user ending location field; user route location field; user destination location field; user context field; user history field; and or another user fields. Each field may include a query element, drop-down menu, free-form text, checkbox, display section, or other method of submitting identifying information in a user interface known in the art. Certain embodiments of user information fields may be configured or configurable to permit selection or editing only by certain one or more users, such as an administrative user. Certain embodiments of the present invention allow the information that is submitted via such fields to be selected for viewing and by which user or groups of users. The information that is selected through the use of the present invention is termed "selected information" for purposes of this application.

More specifically, a user affiliation field may be configured to permit the user to identify his, her, or its affiliation to the event. For example, in the university game embodiment, the user may be able to identify himself or herself as a coach, player, fan of team 1, fan of team 2, fan of team not playing, relationship to player, coach, or fan (e.g., parent, sibling, child, husband, wife, boyfriend, girlfriend, or partner of a player, coach, or fan), alumnus of a university, or other affiliation. Through such affiliation field, a user who is a business may identify itself, for example, as a sponsor, supporter, donor, supplier of goods or services, or user of that which is produced from or as a result of the event (e.g., a radio or television broadcaster).

Certain embodiments of the present invention may permit the user to not only submit for possible publication affiliation information, but also may permit one or more other users to access and sort the submitted user information by this category. For example, if a user wishes to identify location information about only other fans for his or her team, he or she could select for affiliation information identifying by the appropriate team. Other information may not then be shown to the user from his or her user interface or representation of information. Among the advantages of such a selection feature is that if a user wishes to avoid a destination that may be or is being visited by fans from the opposing team, the user can sort the other user's location information to view the (current or anticipated) locations of the fans of the opposing team. Other users may wish to avoid game crowds altogether (e.g., due traffic jams or high wait times at venues) and can identify such information accordingly.

Certain embodiments of the present invention permit users to submit information regarding a location that is relevant to a user relative to an event. For example, the user interface may include location fields - such as, starting location field, intermediate location field, ending location field, route location field, and destination location field - in which the user may submit current location information or anticipated location information. In certain embodiments, the ending location is the same as the destination. In other embodiments, the ending location is an address, but is not correlated with a place name and the destination is the place name. For example, the ending location could be 1600 Pennsylvania Avenue NW, Washington, D.C., 20500, but the destination is the "White House".

Certain embodiments of the present invention include a user interface that do not include a route location field or include an optional location field. Such embodiments may be configured to calculate and display an anticipated route based on the input for the starting location and ending location. In such embodiments, the route may be updated, for example, by user input or by global positioning system ("GPS") detection of real-time location as the user is travelling. In certain embodiments, even if the GPS detects the current location, the user must approve publication of the location to other users.

Similarly, certain embodiments may not include any starting location field and/or ending location field, and such information may be input into the system via a GPS detection step (with or without user approval for publication) rather than user input.

Certain embodiments of the present invention may include a user interface providing a user context field through the use of which a user may enter information about the user's experience before, during, or after the event. Such information may include, for example, reviews intended for other users or memories intended for recollection or sharing. The user context field may permit the user to input digital memorabilia such as photographs, video recordings, audio recordings, or other single media or multimedia items into the system for storage or sharing among other users.

Certain embodiments of the present invention may include a user interface providing a user context field in which a user may publish an advertisement regarding the event. The advertisement may, for example, be directed to transportation to or from the event, such as but not limited to ride sharing or availability of a public transportation (e.g., plane, train, or bus) ticket. The advertisement may present a request for or offer of one or more tickets for the event. Advantageously, this advertisement component may permit those who view the advertisement to obtain some information regarding the user posting the advertisement and therefore develop some confidence about the legitimacy of the advertisement, the posting user, and the advertised request or offer. Such user context information may lessen the likelihood that, for example, fraudulent tickets are offered or requested. Certain embodiments of the present invention may be configurable to include an auction element in which those who are viewing, for example, an offer of tickets may bid for the tickets. The offer element may also permit the offer or to identify that the proceeds or profits from the auction may be donated to one or more specific recipients - such as a needy individual, an institution, or charity.

Certain embodiments of the present invention may include a user interface that includes a user history field through the use of which a user may submit or view information about a user's attendance at or involvement in one or more events that have already occurred or one or more related events. For example, a user may be able to record the fact that he or she attended a series or superseries of events. Through the use of this user history field, one or more users may submit information about an event that may be of interest to other users. Such information may include information that is not necessarily about a personal experience of the user but may be prepared from one or more third party sources, such as the history of a certain event, and may include images or content from archival sources. Certain embodiments of the present invention may include a user interface through the use of which one or more users may access an archival component developed or managed by a user that includes images and content regarding an event. In certain embodiments, a user may be able to view, store, and share such information.

Separate and apart from the user identifying information, certain embodiments of the present invention includes one or more submission components by which a user may submit - and therefore for the system to collect - information regarding one or more events. To collect event information from a user, certain embodiments of the present invention include a user interface that may include any one or more of the following event information fields: event name field, event date field, event time field, event location field, and event context field. Each field may include a query element, drop-down menu, free-form text, checkbox, display section, or other method of identifying information in a user interface known in the art. Certain embodiments of event information fields may be open to management, selection, and/or editing by only one or a certain group of users, such as an administrative user. The user interface may be configurable to permit information input via such fields to be viewable by many users or only certain users.

Certain embodiments of the present invention include a user interface through the use of which one or more users may enter information in an event context field. Examples of the type of information that may be submitted in such field include the relevance of the event (e.g., part of a three-game stand against a certain team, a big rival opponent, need to win to make a playoff game, a certain rank, or certain record for the season, or event venue is giving away certain prizes at that event, etc.), how or where to find related events, context of event as part of a series (e.g., schedule for a team's season), directions to an event, how or where to purchase tickets for an event - for example, from a non-user vendor, discounts for tickets to an event, reviews of an event, or history of the event (e.g., traditions related to the event, record against a certain team, record for players or coaches against a certain team or in the season, etc.).

In certain embodiments, the system may include a connection component through the use of which a user may contact, offer to, identify, choose, or accept other users as having a specified connection status relative to other users. For example, each of two or more users may identify each other as associates, acquaintances, friends, fellow alumni, fan for same team, partners, accomplices, colleagues, or other relationship status.

Certain embodiments of the present invention include a security component that permits users to make certain information available only to users, for example, those who have been authenticated or have a particular connection status.

Certain other embodiments of the present invention may include an information management component through the use of which selected administrators or one or more users may select which information is accessible, for example, to which users.

Upon the submission from one or more users of user information and event information , such information may be aggregated and stored in a main memory, secondary memory, index, catalog, spreadsheet, or database. For purposes of this application, the analog tools and digital tools used to record, and thereby aggregate collected information will be termed generically as a "database" or "database component".

Certain embodiments of the present invention include an integration component through the use of which some or all the information that is aggregated in one or more databases may be managed to provide value to certain users. Certain embodiments of the present invention may include an integration component that may include a user interface through the use of which a user may choose which information he, she, or it wishes to integrate. In other embodiments, the system is configurable or programmable so that certain information is integrated automatically without specific input from a user. The compilation of certain integrated information is termed a "dataset".

As examples of the integration component, in certain embodiments, all of the system users' current location information may be integrated into one dataset. All of the anticipated location information may be integrated into another dataset. Alternatively, all of the system users' current and anticipated location information may be integrated into a single dataset.

In addition, the current location information or anticipated location information of only certain groups of users may be integrated into one or more datasets. As an example, all the anticipated location information for fans of one team may be integrated into a single dataset. Additional examples include current location information for fans travelling from a particular starting location (e.g., town, city, county, state, etc.), a particular intermediate location, or a particular destination each could be integrated into a single dataset. All the past or anticipated attendees of a particular event could be integrated into a single dataset. All the anticipated attendees of a particular type of event (e.g., all events related to a particular university, sport, conference, or league) each could be integrated into a single dataset. Clearly, any combination of information input or stored in the system can be used to form a dataset.

Certain embodiments of the present invention permit the information that a certain dataset may provide to be identified via the representation component. A representation component may be or include a symbol element, for example, that may signify some information about a user or a group of users and an environment element that may be configured to denote the context of the symbol elements. For example, a group of users may be defined by a certain characteristic feature distinguishable by the user group or a larger number of users. Examples of such characteristic feature include starting location, home address, alumni status, connection status, or other information.

Some or all he datasets, either in their native form (text, code, characters, or other) as input or stored in the database or in representation form, may be made available to users of the system and/or non-users of the system.

Advantageously, information submitted by a group of users - that is, "group sourced information", or more generically "crowd sourced information" - may have many practical applications. For example, a dataset may assist a user in finding a location to view a game with other fans (e.g., at a bar or restaurant). A dataset may permit a restaurant or bar to quickly and easily determine whether and possibly the number of people who may patronize the business and therefore make accommodations for the actual or anticipated number of patrons. For example, the business may take one or more steps to decorate (prepare, obtain, purchase, and/or post signage, posters, coasters, etc.) in advance to suit the anticipated patronage, or obtain additional resources (food, drink, kitchen or wait staff, parking, security, etc.),or publish information (such as through the system, a website, or exterior signage) that identifies that the business will be facilitating the patronage of a number of certain users. More immediately, the business may identify which sports game (or other event) is drawing the most interest from its patrons and, accordingly, make that game or event available for viewing on the appropriate number of television screens or monitors. Such actions may retain patrons longer and/or encourage repeat patronage.

As an additional example, the real-time or anticipated location information may be used to predict, assess, and/or publish information regarding groupings or patterns of people, traffic, traffic jams, change traffic lights, or identify need for law enforcement to provide crowd control. The real-time or anticipated location information may be used to predict or assess need for accommodations (e.g., restaurants, bars, hotels, motels, campgrounds, parking lots, etc.) or resources outside of the actual event venue.

Certain embodiments of the present invention may facilitate the offering, donation, auctioning, or sale of one or more datasets to one or more users or to third parties including venue managers, event planners, law enforcement, urban planners, ticket marketing entities, accommodations entities (e.g., restaurants, bars, hotels, motels, campgrounds, parking lots), retailers located nearby an event location or route to an event location, service providers, or other entities who may wish to receive one or more types of datasets. For example, a purveyor of a food truck services may wish to obtain user location information or event information in a dataset so that the purveyor is able to optimize the location of trucks relative to the event location.

Additional datasets may include purchasing or sales information regarding users. For example, a dataset that includes ticket purchasing information may be used to predict or assess users that are likely to buy tickets at a certain time or at all and for what amount. Such a dataset may reveal that some users are likely to purchase tickets only on the day of the event or in some other time frame, or because a gift is given to those who attend the game, or because of some other occurrence . Accordingly, ticket selling or marketing entities may value such datasets in order to better determine who and in what context users may purchase tickets.

Certain embodiments of the present invention include a messaging component, through which users may send and receive messages. The messaging component may utilize email, instant messaging, text messaging electronic mail ("e-mail"), instant messaging, text messaging, push notifications, or a specific inbox accessible only via the user interface.

Other components of certain embodiments of the present invention include a rewards component. A rewards component may be configured to permit users to give, earn, or receive rewards. The rewards may have monetary value, e.g., a coupon or special deal from a retailer or accommodation entity possibly located nearby an event location or route to an event location. The rewards may have no monetary value, but instead have emotional, social, or other value. As an example, a non-monetary reward could include a "badge" for the user who travelled the furthest or shortest distance to attend the event; the user that has attended the a certain number of related events, events in a series, or events in a superseries; the user attending an event for the first time; the user who has travelled the most over a season to see an event or series of events; or the user who has attended the most of a certain type of event of any user. The badge could be displayed with other user information available through the system.

Other components of certain embodiments of the present invention include a scrapbooking component A scrapbooking component may be configured to permit a user to correlate or view certain scrapbook information, such as which events the user attended in a series or superseries, which other users (or sometimes non-users) attended certain events, which related events were attended, digital memorabilia, or other relevant information.

The present invention and its attributes and advantages will be further understood and appreciated with reference to the detailed description below of presently contemplated embodiments, taken in conjunction with the accompanying drawings.

### BRIEF DESCRIPTION OF THE DRAWINGS

The preferred embodiments of the invention will be described in conjunction with the appended drawings provided to illustrate and not to the limit the invention, where like designations denote like elements, and in which:
FIG. 1 illustrates one preferred system embodiment of the present invention;
FIG. 2 illustrates another system embodiment of the present invention;
FIG. 3A illustrates a user interface configured to permit entry of user information according to an embodiment of the present invention;
FIG. 3B illustrates a user interface configured to permit entry of event information according to an embodiment of the present invention;
FIG. 4A illustrates a user interface of an embodiment of the present invention;
FIG. 4B illustrates another user interface of an embodiment of the present invention;
FIG. 4C illustrates yet another user interface of an embodiment of the present invention;
FIG. 4D illustrates an additional user interface of an embodiment of the present invention;

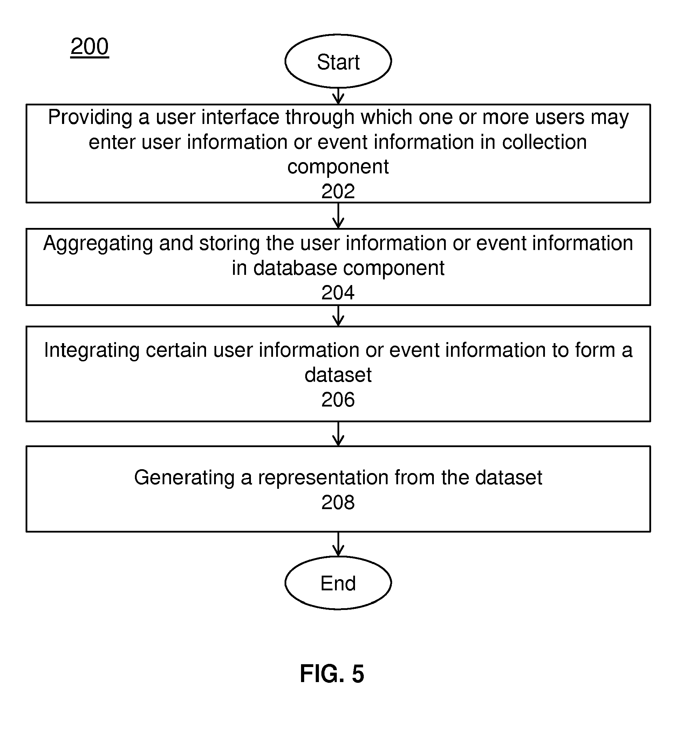

FIG. 5 illustrates a method embodiment of the present invention;
FIG. 6 illustrates an exemplary computer system according to the present invention; and
FIG. 7 illustrates an exemplary cloud computing system according to the present invention.

### DETAILED DESCRIPTION OFEMBODIMENTS OF THE INVENTION

In the following detailed description, for purposes of explanation, specific numbers and configurations are set out in order to provide a thorough understanding of the invention. It will be apparent, however, to one having ordinary skill in the art that the invention may be practiced without all specific details. In some instances, well-known features may be omitted or simplified so as not to obscure the present invention. Furthermore, reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily referring to all embodiments.

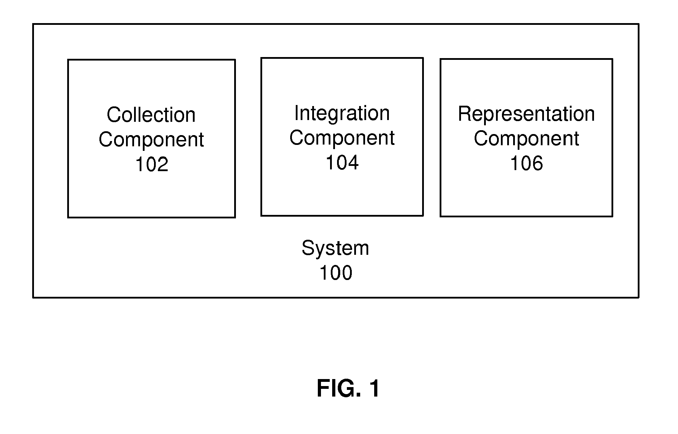

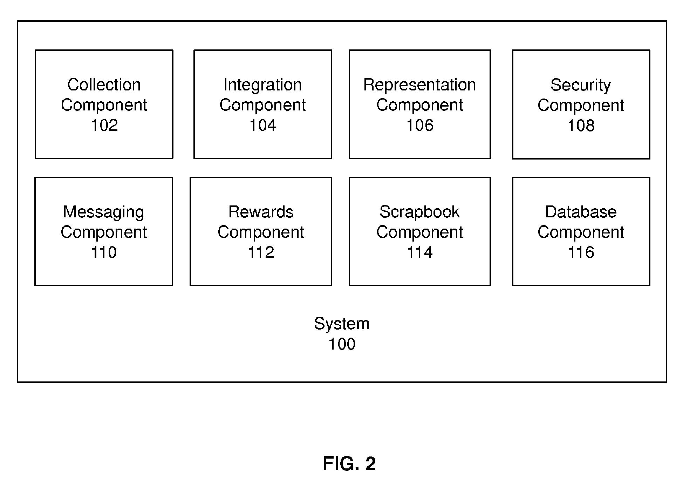

FIG. 1 illustrates a certain embodiments of the present invention. The embodiment illustrated in FIG.1 is directed to a system 100 of the present invention that includes a collection component 102, integration component 104, and a representation component 106. Certain embodiments of the present invention may include also one or some combination of additional components, some of which include a security component 108, messaging component 110, rewards component 112, scrapbooking component 114, and database component 116 as illustrated in FIG. 2.

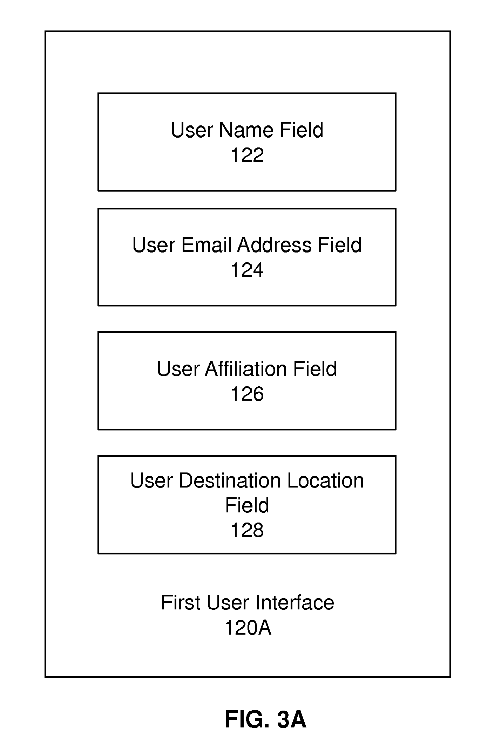

FIG. 3A illustrates an example of a first user interface 120A configured to permit input of user information. The illustrated embodiment includes a user name field 122, a user email address field 124, a user affiliation field 126, and a user destination field 128.

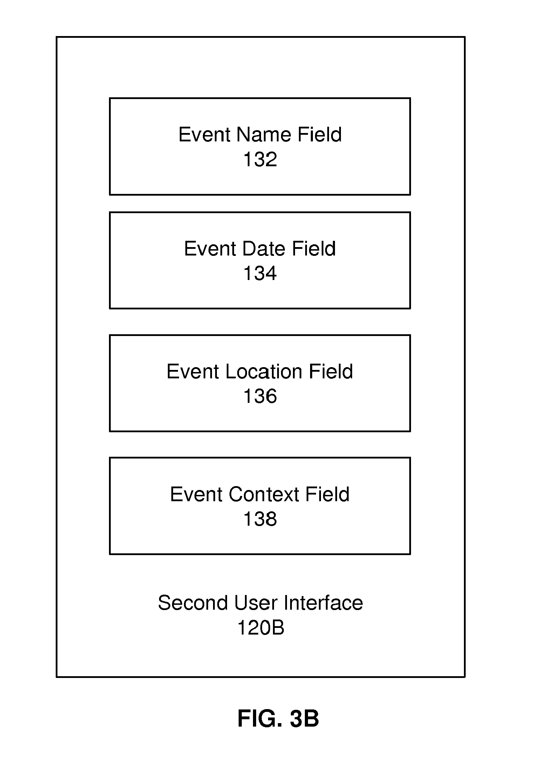

Similarly, FIG. 3B illustrates an example of a second user interface 120B configured to permit input of event information. The illustrated embodiment includes an event name field 132, event date field 134, event location field 136, and event context field 138.

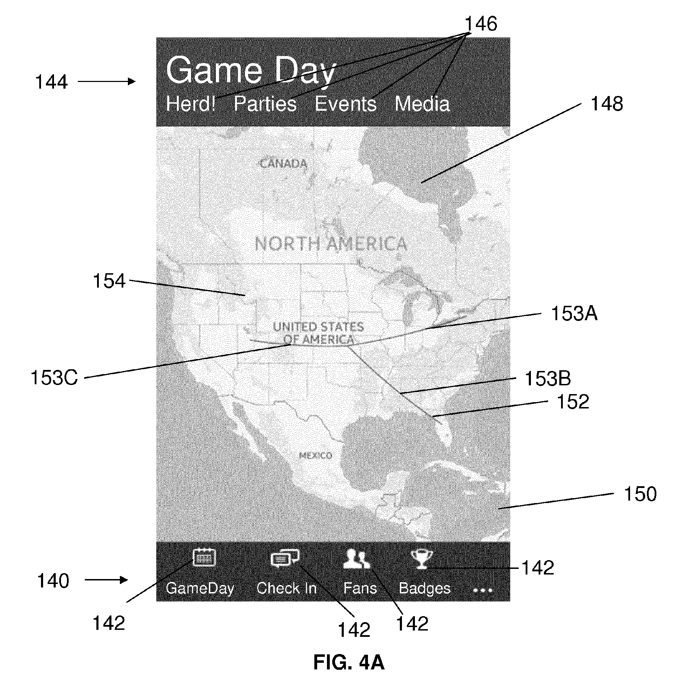

FIG. 4A through FIG. 4D illustrate embodiments of representations 150 of a dataset according to the present invention. A representation 150 may include a menu 140 (with menu items 142), submenu 144 (with submenu items 146), and presentation interface 148.

A presentation interface 148 may be configured to display a symbol element 152 signifying some information about each user or a group of users. An environment element 154 may be configured to denote the context of the symbol elements. Also, an event element 156 may be configured to indicate information about the event.

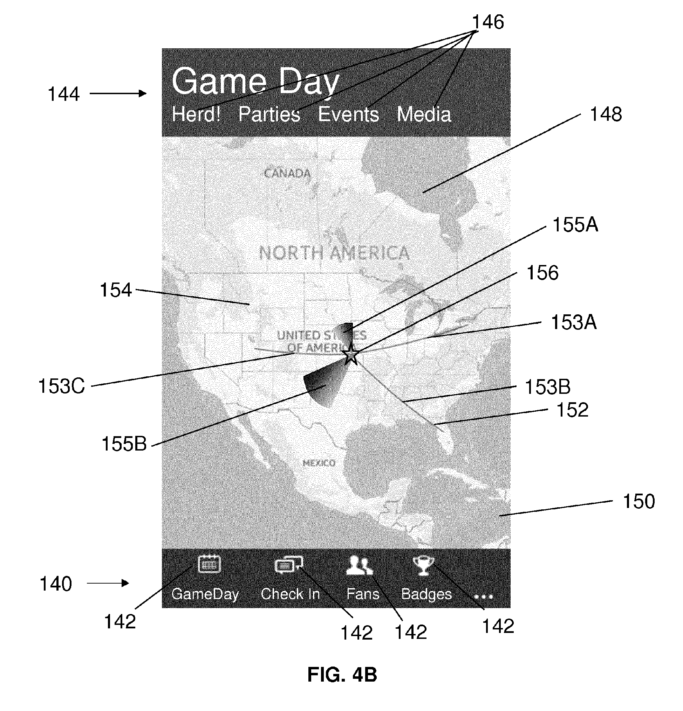

More specifically, in the illustrated embodiment, the symbol element 152 includes a first line symbol 153A signifying the route of a first user, a second line symbol 153B signifying the route of a second user, and a third line symbol 153C signifying the route of a third user. Sometimes route information is illustrated as a general route which includes a generally straight line from the starting location to the ending location without regard for the actual route. Route information also may be illustrated as a specific route which may include turn by turn route over actual roads. Also group route information may be illustrated by polygon elements 155. In the embodiment illustrated in FIG. 4B, the polygon elements 155A and 155B are configured as shaded polygon elements such that the shading designates the quantity of users on a general route.

Also illustrated in FIG. 4B, an event element 156 may be configured to indicate information about the event, such as location information.

In certain embodiments, a symbol element 152 may have certain characteristic elements configured to convey specific information. As an example, a line symbol 153 may be a certain thickness, color, or pattern (e.g., dotted line or broken line) to convey selected information. In certain embodiments, the thickness of the line may indicate how many users are on the route. A certain color could also convey a team affiliation for certain users. Any characteristic of the symbol element 152 may be correlated with any information available in the system. The symbol elements 152 in a representation 150 may update in real-time or periodically upon user input of information.

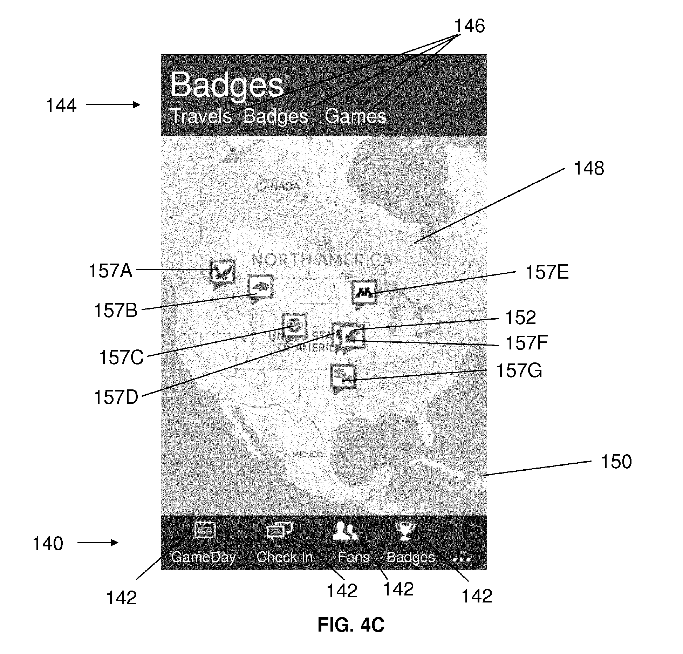

A symbol element 152 also may be configured to convey information other than route information. As illustrated in FIG. 4C, each symbol element 152 may be configured and positioned to convey information. The symbol elements 152 in FIG. 4C are mascot symbols 157 positioned nearby the team which the mascot represents. The presence of such symbol elements152 in the representation 150 may indicate that the specific user plans to or has attended each of those games or that the user is selling tickets for those games.

The environment element 154 illustrated in FIG. 4A and FIG. 4B is a map of most of North America. In certain embodiments, the environment element 154 may include a map of a stadium, venue, town, city, state, world, or a non-map depiction of the relevant environment. In map embodiments of the environment element 154, the map may be a physical map, geographic map, traffic map, road map, economic map, cartoon map, political map, weather map, or a thematic map.

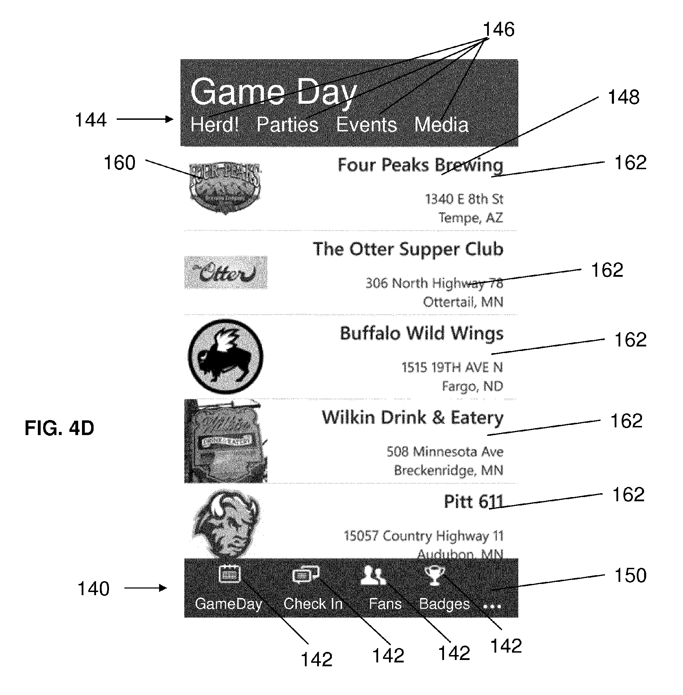

FIG. 4D illustrates a list of related events 160 and detailed information about each related event.

Certain embodiments of a representation 150 also may include a graphical representation, such as a bar graph, pie graph, line graph, word map, or other graph known in the art, of the dataset.

In certain embodiments, a user can select exactly which information will be included in the representation 150. For example, a representation 150 may include all or only information from a single user. A representation 150 may include information about a single event from a crowd of users or all users in the system. Many combinations of information can be imported to generate the representation.

In certain embodiments, the present invention is implemented by method 200 steps. The system provides a user interface through which users may enter user information or event information into a collection component 202. The user information and event information may be aggregated and stored in a database component 204. For purposes of this application, the user information and event information stored in the system may be termed "collected information". Certain aggregated information may be selected and integrated to form a dataset 206. A dataset may comprise only one type of information (e.g., only usernames, only starting locations) or may comprise multiple types of information (e.g., usernames and starting locations and ending locations). The dataset may be used to generate a representation 208. The dataset and/or representation may be displayed, publicized, shared, sold, auctioned, or otherwise transferred to other users or non-users. In certain embodiments, a user can control how information entered by him or her is transferred to other users by controlling the security of the information.

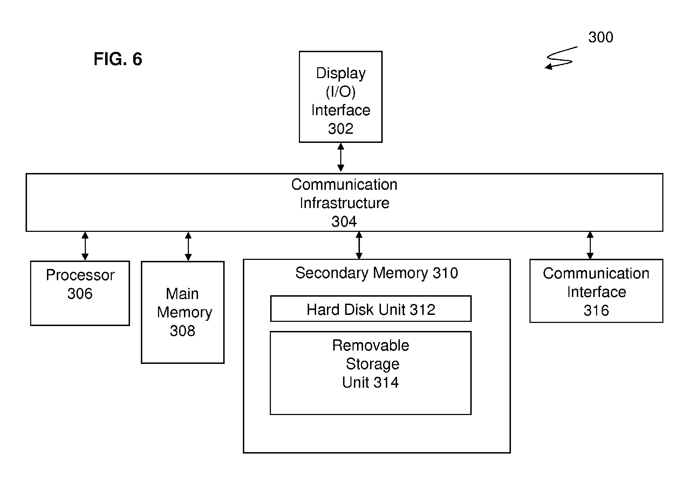

FIG. 6 illustrates an exemplary computer system 300 that may be used to implement the methods according to the invention. One or more computer systems 300 may carry out the methods presented herein as computer code.

Computer system 300 includes an input/output display interface 302 connected to communication infrastructure 304 - such as a bus -, which forwards data such as graphics, text, and information, from the communication infrastructure 304 or from a frame buffer (not shown) to other components of the computer system 300. The input/output display interface 302 may be, for example, a keyboard, touch screen, joystick, trackball, mouse, monitor, speaker, printer, microphone, projector, Google Glass® unit, accelerometer, global positioning system, any other computer peripheral device, or any combination thereof, capable of measuring, entering, and/or viewing data.

Computer system 300 includes one or more processors 306, which may be a special purpose or a general-purpose digital signal processor that processes certain information. Computer system 300 also includes a main memory 308, for example random access memory ("RAM"), read-only memory ("ROM"), mass storage device, or any combination thereof. Computer system 300 may also include a secondary memory 310 such as a hard disk unit 312, a removable storage unit 314, or any combination thereof. Computer system 300 may also include a communication interface 316, for example, a modem, a network interface (such as an Ethernet card or Ethernet cable), a communication port, a PCMCIA slot and card, wired or wireless systems (such as Wi-Fi, Bluetooth, Infrared), local area networks, wide area networks, intranets, etc.

It is contemplated that the main memory 308, secondary memory 310, communication interface 316, or a combination thereof, function as a computer usable storage medium, otherwise referred to as a computer readable storage medium, to store and/or access computer software including computer instructions. For example, computer programs or other instructions may be loaded into the computer system 300 such as through a removable storage device, for example, a floppy disk, ZIP disks, magnetic tape, portable flash drive, optical disk such as a CD or DVD or Blu-ray, Micro-Electro-Mechanical Systems ("MEMS"), nanotechnological apparatus. Specifically, computer software including computer instructions may be transferred from the removable storage unit 314 or hard disc unit 312 to the secondary memory 310 or through the communication infrastructure 304 to the main memory 308 of the computer system 300.

Communication interface 316 allows software, instructions and data to be transferred between the computer system 300 and external devices or external networks. Software, instructions, and/or data transferred by the communication interface 316 are typically in the form of signals that may be electronic, electromagnetic, optical, or other signals capable of being sent and received by the communication interface 316. Signals may be sent and received using wire or cable, fiber optics, a phone line, a cellular phone link, a Radio Frequency ("RF") link, wireless link, or other communication channels.

Computer programs, when executed, enable the computer system 300, particularly the processor 306, to implement the methods of the invention according to computer software including instructions.

The computer system 300 described herein may perform any one of, or any combination of, the steps of any of the methods presented herein. It is also contemplated that the methods according to the invention may be performed automatically, or may be invoked by some form of manual intervention.

The computer system 300 of FIG. 6 is provided only for purposes of illustration, such that the invention is not limited to this specific embodiment. It is appreciated that a person skilled in the relevant art knows how to program and implement the invention using any computer system.

Examples of a computer system 300 include a handheld device and include any small-sized computer device including, for example, a personal digital assistant ("PDA"), smart hand-held computing device, cellular telephone, or a laptop or netbook computer, hand held console or MP3 player, tablet, or similar hand held computer device, such as an iPad^{®}, iPad Touch^{®} or iPhone^{®}.

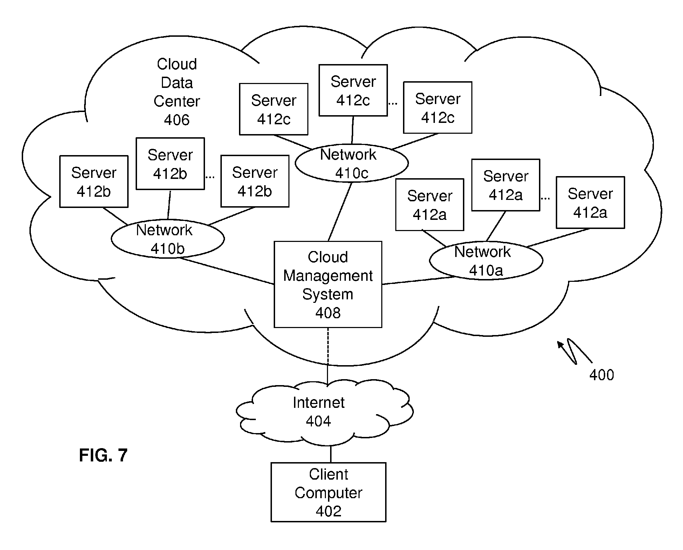

FIG. 7 illustrates an exemplary cloud computing system 400 that may be used to implement the methods according to the present invention. The cloud computing system 400 includes a plurality of interconnected computing environments. The cloud computing system 400 utilizes the resources from various networks as a collective virtual computer, where the services and applications can run independently from a particular computer or server configuration making hardware less important.

Specifically, the cloud computing system 400 includes at least one client computer 402. The client computer 402 may be any device through the use of which a distributed computing environment may be accessed to perform the methods disclosed herein, for example, a desktop computer, portable computer, mobile phone, personal digital assistant, tablet to name a few. The client computer 402 includes memory such as random access memory ("RAM"), read-only memory ("ROM"), mass storage device, or any combination thereof. The memory functions as a computer usable storage medium, otherwise referred to as a computer readable storage medium, to store and/or access computer software and/or instructions.

The client computer 402 also includes a communications interface, for example, a modem, a network interface (such as an Ethernet card), a communications port, a PCMCIA slot and card, wired or wireless systems, etc. The communications interface allows communication through transferred signals between the client computer 402 and external devices including networks such as the Internet 404 and cloud data center 406. Communication may be implemented using wireless or wired capability such as cable, fiber optics, a phone line, a cellular phone link, radio waves or other communication channels.

The client computer 402 establishes communication with the Internet 404 - specifically to one or more servers - to, in turn, establish communication with one or more cloud data centers 406. A cloud data center 406 includes one or more networks 410a, 410b, 410c managed through a cloud management system 408. Each network 410a, 410b, 410c includes resource servers 412a, 412b, 412c, respectively. Servers 412a, 412b, 412c permit access to a collection of computing resources and components that can be invoked to instantiate a virtual machine, process, or other resource for a limited or defined duration. For example, one group of resource servers can host and serve an operating system or components thereof to deliver and instantiate a virtual machine. Another group of resource servers can accept requests to host computing cycles or processor time, to supply a defined level of processing power for a virtual machine. A further group of resource servers can host and serve applications to load on an instantiation of a virtual machine, such as an email client, a browser application, a messaging application, or other applications or software.

The cloud management system 408 can comprise a dedicated or centralized server and/or other software, hardware, and network tools to communicate with one or more networks 410a, 410b, 410c, such as the Internet or other public or private network, with all sets of resource servers 412a, 412b, 412c. The cloud management system 408 may be configured to query and identify the computing resources and components managed by the set of resource servers 412a, 412b, 412c needed and available for use in the cloud data center 406. Specifically, the cloud management system 408 may be configured to identify the hardware resources and components such as type and amount of processing power, type and amount of memory, type and amount of storage, type and amount of network bandwidth and the like, of the set of resource servers 412a, 412b, 412c needed and available for use in the cloud data center 406. Likewise, the cloud management system 408 can be configured to identify the software resources and components, such as type of Operating System ("OS"), application programs, and the like, of the set of resource servers 412a, 412b, 412c needed and available for use in the cloud data center 406.

The present invention is also directed to computer products, otherwise referred to as computer program products, to provide software to the cloud computing system 400. Computer products store software on any computer useable medium, known now or in the future. Such software, when executed, may implement the methods according to certain embodiments of the invention. Examples of computer useable mediums include, but are not limited to, primary storage devices (e.g., any type of random access memory), secondary storage devices (e.g., hard drives, floppy disks, CD ROMS, ZIP disks, tapes, magnetic storage devices, optical storage devices, Micro-Electro-Mechanical Systems ("MEMS"), nanotechnological storage device, etc.), and communication mediums (e.g., wired and wireless communications networks, local area networks, wide area networks, intranets, etc.). It is to be appreciated that the embodiments described herein may be implemented using software, hardware, firmware, or combinations thereof.

The cloud computing system 400 of FIG. 7 is provided only for purposes of illustration and does not limit the invention to this specific embodiment. It is appreciated that a person skilled in the relevant art knows how to program and implement the invention using any computer system or network architecture.

While the disclosure is susceptible to various modifications and alternative forms, specific exemplary embodiments of the present invention have been shown by way of example in the drawings and have been described in detail. It should be understood, however, that there is no intent to limit the disclosure to the particular embodiments disclosed, but on the contrary, the intention is to cover all modifications, equivalents, and alternatives falling within the scope of the disclosure as defined by the appended claims.

## Claims

1. A system for crowd-sourcing information regarding an event, comprising:
a processor;
a main memory in communication with the processor via a communication infrastructure and storing instructions that, when executed by the processor, cause the processor to:
provide a user interface through which one or more users may enter user identifying information or event identifying information into a collection component; wherein any user identifying information or event identifying information entered into the collection component is together collected information;
aggregate and store the collected information in a database component; integrate certain of the collected information to form a dataset; and generate a representation from the dataset.

2. The system according to claim 1, wherein the user interface includes submission components to facilitate submission of one or more types of the user identifying information.

3. The system according to claim 2, wherein the submission components permit the user identifying information from one or more user information fields to be submitted.

4. The system according to claim 1, wherein the user interface includes submission components to facilitate submission of one or more types of the even identifying information.

5. The system according to claim 4, wherein the submission components permit the event identifying information from one or more event information fields to be submitted.

6. The system according to claim 1, wherein the processor allows one or more users to select specific information from the collected information.

7. The system according to claim 6, wherein the processor allows one or more users to publish the selected information to one or more members of the crowd.
